# EUROPEAN PATENT SPECIFICATION

(11) **EP 2 513 006 B1**
(45) Date of publication and mention of the grant of the patent: **02.09.2020**
(21) Application number: 10838066.8
(22) Date of filing: 28.10.2010
(51) Int. Cl.: C04B 14/00, B22C 1/02, B22C 1/22, B22C 9/02

(54) **Use of an organic acid salt to reduce veining of a metal casting**
Verwendung eines sauren organischen Salzes zur Reduzierung von Blattrippen in Metallgussteilen
Utilisation d'un sel d'acide organique pour diminuer la formation des écailles sur les pièces métalliques coulées

(30) Priority: 16.12.2009 US 286913 P; 01.09.2010 US 873819
(43) Date of publication of application: 24.10.2012
(73) Proprietor: ASK Chemicals LLC, Wilmington, DE 19801 (US)
(72) Inventor: SHOWMAN, Ralph, E., Galloway, OH 43119 (US); HARMON, Sean, B., Columbus, OH 43204 (US)
(74) Representative: Müller Schupfner & Partner Patent- und Rechtsanwaltspartnerschaft mbB
(86) International application number: PCT/US2010/054371
(87) International publication number: WO 2011/075222

(56) References cited:
- WO-A1-02/087807
- GB-A- 1 413 779
- US-A- 4 468 486
- US-A- 4 584 328
- US-A- 5 643 675
- US-A- 5 646 199
- US-A1- 2002 108 733
- US-A1- 2003 155 098
- US-A1- 2005 155 741
- US-A1- 2009 314 461
- US-B1- 6 554 051

## Description

### Background

Silica sand (SiO₂, quartz) is widely used as an aggregate in the metal casting industry for the production of molds and cores. It is used for both "greensand" (sand bonded with water and clay) and for chemically bonded sand. A variety of inorganic and organic chemical binders are used including phenolic urethane, furan, epoxy-acrylic, ester-cured phenolic.

The binders are mixed with the sand and the mixture is compacted in tooling to take the shape of the desired mold or core, then the binder hardens and bonds the sand grains together. The mold and core components are then assembled into a mold package and metal is poured into the package and fills the internal cavities in the shape of the desired casting. The heat from the liquid metal, especially in the case of ferrous alloys with melting points in excess of 1100°C, starts to decompose the binder and heat the sand. As the silica sand heats, thermal expansion occurs. This expansion is relatively linear until the temperature reaches approximately 570°C when the crystal structure of the sand grains transforms. This structural transformation is accompanied by rapid isothermal expansion followed by a period of thermal shrinkage up to around 980°C when another crystal structure change occurs with more thermal expansion.

It is believed that these rapid volumetric changes in the sand grains develop mechanical stresses in the layers of sand near the casting surface that can lead to cracking of the mold or core surface which is in contact with the hot molten liquid metal in the mold. The molten liquid metal can flow into these cracks and form veins or fins on the casting surface. These are undesirable and require time and effort to remove. In critical applications with small internal cored passageways, the vein can extend across and block the passageway. Examples of these critical castings are engine blocks and heads with water jackets that could be blocked by the veins in locations that are difficult to detect and even more difficult to remove.

Other types of aggregates can also be used to produce "sand" molds and cores including naturally occurring zircon, chromite, olivine, and man-made ceramic and other aggregates. These have lower expansion rates with no phase changes and a much reduced tendency to form veining defects, but are also much more expensive.

Sand additives have been used with silica sand to reduce the veining tendency. These sand additives typically fall into three main categories based on their mechanism of activity.

The first category consists of "low expansion aggregates" such as a 90:10 mix of silica and zircon sand, which has a lower expansion value than silica alone. In addition to the naturally occurring aggregates, man-made aggregates like ceramic (mullite) beads, aluminum-silicate "microspheres", or fused silica can be used.

The second category consists of "organic cushioning materials" such as wood flour, dextrin and starch. When mixed with the silica sand, they occupy some volume between the sand grains. Thus, when molten metal is poured into the mold, the heat from the molten metal quickly burns out the extra organic material. The volume previously occupied by the organic material can then provide a "cushion" or space for the expansion of the sand, thus reducing the buildup of stresses in the sand.

The third category of sand additives consists of "fluxes" that react with the surface of the sand grains to chemically change the surface layer of the sand and the resulting expansion characteristics of the sand. Examples of such fluxes are iron oxides, both hematite (Fe₂O₃) and magnetite (Fe₃O₄), which have long been used as sand additives. Other flux-type sand additives include titanium oxide (TiO₂) and lithia (Li₂O) containing materials such as spodumene. It has also been demonstrated that the use of a combination of several different flux type additives may have a beneficial effect. This is particularly true when hematite is used with other additives.

The existing categories of sand additives can reduce veining in castings, but all three categories of sand additive have some important disadvantages. The low expansion aggregates tend to be expensive compared to silica sand and need to be used at relatively high levels (greater than 10 percent based on sand). The organic cushioning materials tend to add to the total amount of gas produced by the mold or core when exposed to liquid metal and can significantly reduce mold/core strength when used at levels above about 1 percent. The flux-type sand additives are currently the most widely used additives, but they also have some drawbacks. For instance, iron oxides, when used above about 2 percent by weight based on the sand (BOS) can cause increased metal penetration and can reduce mold/core strength when used at higher levels. The lithia bearing spodumenes are expensive and typically are used in higher levels, e.g. 4-8 percent by weight based on the sand (BOS).

US 4584328 teaches a method of accelerating the breakdown of phenolic resin bonded cores by adding encapsulated alkali metal carbonates, bicarbonates and/or organic acid salts. US 4468486 relates to carboxylic acid salts as additives to phenolic resins for improving the shake out property of cast shell moulds. GB 1413779 discloses the use of iron scale in combination with carboxylic acid salts for extending the bench life of moulding material mixtures. WO 02087807 A1 discloses magnetite containing Fe₂O₃ in combination with lithia as anti-veining additives for metal castings.

### Summary

The invention relates to the use of an organic acid salt, preferably citrates, acetates, and tartrates, being part of a foundry mix to reduce veining of a metal casting, as defined in claim 1. The organic acid salts are used in amounts of 0.25 to 5.0 weight percent based upon the weight of the foundry aggregate to effectively reduce the veining of a metal casting prepared with the foundry mix. When the foundry mix is used, veining is reduced or eliminated in metal castings made from the foundry shapes that are used to cast metal parts.

It was surprising that organic acid salts could be used in the foundry mix to improve veining because these salts are generally acidic and could interfere with the sand binder chemistry. For instance, since warm-box binders use an acidic catalyst, the presence of organic acid salts could prematurely initiate the reaction. On the other hand, phenolic urethane cold-box binders are alkaline catalyzed and the presence of the organic acid salts could retard the reaction or require higher catalyst levels. The organic acid salt also decomposes at temperatures well below metal casting temperatures and release water and other gases that are generally thought to be detrimental to molds and cores.

### Detailed disclosure

Example of organic acid salts that are used as the sand additive of the foundry mix include sodium citrate, potassium citrate, calcium citrate, magnesium citrate, sodium acetate, potassium acetate, calcium acetate, magnesium acetate, nitrilo triacetic acid trisodium salt, ethylene diamine tetraacetic acid tetrasodium salt, and potassium bitartrate.
The amount of organic acid salts salt used in the foundry mix is an amount effective to reduce or eliminate veining in the metal castings made with foundry shapes (e.g. molds and cores) used to cast metal parts. An effective amount of the organic acid salt is from 0.25 percent by weight to 5.0 percent by weight based upon the weight of the foundry aggregate, preferably from 0.5 percent by weight to 3.0 percent by weight based upon the weight of the foundry aggregate, and most preferably from 0.75 percent by weight to 2.0 percent by weight based upon the weight of the foundry aggregate.

In addition to organic acid salts, the foundry mix may also contain known sand additives such as red iron oxide, black iron oxide, and lithia-containing compounds. It is particularly useful to use red iron oxide in conjunction with the organic acid salt. If red iron oxide is used with the organic acid salt, it is typically used in a weight ratio of a citrate and/or acetate salt to red iron oxide from 1 :1 to 4: 1, preferably from 2:1 to 4: 1.

The foundry mix may also contain a foundry binder. These foundry binders are well-known in the art. Any inorganic or organic warm-box, hot-box, no-bake or cold-box binder can be used if it will sufficiently hold the foundry shape together and polymerize in the presence of a curing catalyst. Examples of such binders are phenolic resins, phenolic urethane binders, furan binders, alkaline phenolic resole binders, and epoxy-acrylic binders among others. Particularly preferred are phenolic urethane binders and epoxy-acrylic binders. The phenolic urethane binders are described in U.S. Patent Nos. 3,485,497 and 3,409,579. These binders are based on a two part system, one part being a phenolic resin component and the other part being a polyisocyanate component. The epoxy-acrylic binders cured with sulfur dioxide in the presence of an oxidizing agent are described in U.S. Patent No. 4,526,219.

The amount of binder needed is an effective amount to maintain the shape and allow for effective curing, i.e. which will produce a foundry shape which can be handled or self-supported after curing. An effective amount of binder is typically greater than about 0.1 percent by weight, based upon the weight of the foundry aggregate. Preferably the amount of binder ranges from about 0.5 percent by weight to about 5 percent by weight, more preferably from about 0.5 to about 2 percent by weight.

Curing the foundry mix by the no-bake process takes place by mixing a liquid curing catalyst with the foundry mix (alternatively by mixing the liquid curing catalyst with the foundry mix first), shaping the foundry mix containing the catalyst, and allowing the shaped foundry mix to cure, typically at ambient temperature without the addition of heat. The warm-box and hot-box processes are similar to the no-bake process, except the tooling and/or the foundry shape is heated in order to facilitate curing. The preferred liquid curing catalyst is a tertiary amine for the no bake process is described in U.S. Patent No. 3,485,797. Specific examples of such liquid curing catalysts include 4-alkyl pyridines wherein the alkyl group has from one to four carbon atoms, isoquinoline, arylpyridines such as phenyl pyridine, pyridine, acridine, 2-methoxypyridine, pyridazine, 3-chloro pyridine, quinoline, N-methyl imidazole, N-ethyl imidazole, 4,4'-dipyridine, 4-phenylpropylpyridine, 1-methylbenzimidazole, and 1 ,4-thiazine. If a furan binder is used in a warm-box, hot-box, or no-bake process, the curing catalyst typically used is an inorganic or organic acid, e.g. strong acids such as toluene sulfonic acid, xylene sulfonic acid, benzene sulfonic acid, HCl, and H₂SO₄. Weak acid such as phosphoric acid can also be used.

Curing the foundry shape by the cold-box process takes place by blowing or ramming the foundry mix into a pattern and contacting the foundry shape with a vaporous or gaseous catalyst. Various vapor or vapor/gas mixtures or gases such as tertiary amines, carbon dioxide, methyl formate, and sulfur dioxide can be used depending on the chemical binder chosen. Those skilled in the art will know which gaseous curing agent is appropriate for the binder used. For example, an amine vapor/gas mixture is used with phenolic-urethane resins. Sulfur dioxide (in conjunction with an oxidizing agent) is used with an epoxy-acrylic resin.

See U.S. Patent No. 4,526,219. Carbon dioxide (see U.S. Patent No. 4,985,489) or methyl esters (see U.S. Patent No. 4,750,716) are used with alkaline phenolic resole resins.

Carbon dioxide is also used with binders based on silicates. See U.S. Patent No. 4,391,642.

Preferably the binder is a cold-box phenolic urethane binder cured by passing a tertiary amine gas, such a triethylamine, through the molded foundry mix in the manner as described in U.S. Patent No. 3,409,579, or the epoxy-acrylic binder cured with sulfur dioxide in the presence of an oxidizing agent as described in U.S. Patent No. 4,526,219.

It will be apparent to those skilled in the art that other additives such as release agents, solvents, bench life extenders, silicone compounds, etc. may be added to the foundry mix.

### Examples

In Example A (comparison example) and Examples 1, test cores (2" diameter by 2" high cylindrical cores) were produced by the warm-box process by mixing Badger 5574 silica sand with CHEM-REZ® 995 furan binder (commercially available from Ashland Inc.) at 1.25 percent BOS, 20 percent BOB (based on binders) of CHEM-REZ FC521 catalyst (commercially available from Ashland Inc.), and the sand additive and amount (based on the weight of the sand, BOS) shown in Table 1, and blowing the mix into the corebox which was maintained at about 235°C.

In Example B (comparison example) and Examples 2-4, the test cores were prepared by the cold-box process by mixing Wedron 540 silica sand with ISOCURE® TKW 10/20 phenolic urethane binder (a two-part phenolic urethane binder commercially available from Ashland Inc. where the ratio of the Part I to Part II is 1:1) at 1.0 percent and in Table 1, blowing the mix into a corebox with 2" cylindrical by 2" high cavities and curing the cores with TEA catalyst.

The veining characteristics of the test cores were measured using a "penetration" test casting in which the test cores are glued into a mold assembly. Molten Class 30 grey iron, having a temperature of approximately 1450°C, is then poured into the mold assembly containing the test cores. The penetration tests for veining and mechanical penetration are described by Tordoff and Tenaglia in AFS Transactions, pp.149-158 (AFS 84th Annual meeting, St. Louis, Mo., Apr. 21-25, 1980). Surface defects were determined by visual observation and the rating of the casting was based upon experience and photographs of the test castings.

The casting is cooled and cleaned by sand blasting and the internal surfaces of the cavity created by the cores are evaluated and compared visually for veining and rated on a scale of 1 to 5, where 5 represents the worst veining and 1 showing no veining. The results are set forth in Table 1 that follows.

**Table 1 (Veining characteristics of test cores)**

| **Example** | **Additive** | **Total amount of anti-veining additive (BOS)** | **Veining (rating)** |
|---|---|---|---|
| A (warmbox) | None | None | 4.0 |
| I (warmbox) | Potassium bitartrate | 1 percent total ¹ | 1.0 |
| | | | |
| B (cold-box) | none | None | 3.0 |
| 2 (cold-box) | Sodium citrate | 1 percent total ² | 1.0 |
| 3 (cold-box) | Sodium citrate | 2 percent total ¹ | 1.0 |
| 4 (cold-box) | Calcium acetate | 2 percent total ¹ | 1.0 |

| | | | |
|---|---|---|---|
| ¹ - no iron oxide addition ² - 1 percent iron oxide also added to control penetration | | | |

The data in Table I clearly indicate that the test cores prepared with a foundry mix containing an organic acid salt such as a citrate, acetate, and tartrate salt reduce veining in the test casting, even at levels as low as 1.0 weight percent BOS.

## Claims

1. Use of an organic acid salt to reduce veining of a metal casting, the organic acid salts being part of a foundry mix, the foundry mix comprising:
(a) foundry aggregate; and
(b) an organic acid salt in an amount between 0.25 percent by weight to 5.0 percent by weight based upon the weight of the foundry aggregate.

2. The use of the foundry mix of claim 1 which further comprises an iron oxide selected from the group consisting of red iron oxide, black iron oxide, and mixtures thereof.

3. The use of the foundry mix of claim 2 wherein the iron oxide is red iron oxide.

4. The use of the foundry mix of claim 3 wherein the foundry aggregate comprises silica sand.

5. The use of the foundry mix of claim 4 wherein the organic acid salt is selected from the group consisting of citrate salts, acetate salts, tartrate salts and mixtures thereof.

6. The use of the foundry mix of claim 5 wherein the salt is sodium citrate.

7. The use of the foundry mix of claim 4 or 5 wherein the weight ratio of an organic acid salt to red iron oxide is from 1 :1 to 4:1.

8. The use of the foundry mix of claim 7 wherein the weight ratio of organic acid salt to red iron oxide is from 1 : 1 to 2:1.

9. The use of the foundry mix of claim 1 wherein the foundry mix contains an organic binder.

10. The use of the foundry mix of claim 9 wherein the binder is a phenolic urethane binder or an epoxy acrylate binder.

11. The use of the foundry mix of claim 10 wherein the foundry mix contains a catalyst.

12. The use of the foundry mix of claim 9 wherein the amount of organic acid salt in the foundry mix is from 0.5 percent by weight to 4.0 percent by weight based upon the weight of the foundry aggregate.

13. The use of the foundry mix of claim 11 wherein the amount of organic acid salt in the foundry mix is from 0.5 percent by weight to 4.0 percent by weight based upon the weight of the foundry aggregate.

14. The use of the foundry mix of claim 12 wherein the amount of organic acid salt in the foundry mix is from 0.5 percent by weight to 2.5 percent by weight based upon the weight of the foundry aggregate.

15. The use of the foundry mix of claim 13 wherein the amount of organic acid salt in the foundry mix is from 0.5 percent by weight to 2.5 percent by weight based upon the weight of the foundry aggregate.

## Patentansprüche

1. Verwendung eines sauren organischen Salzes zur Reduzierung von Blattrippen in Metallgussteilen, wobei die sauren organischen Salze Teil einer Gießereimischung sind und die Gießereimischung Folgendes umfasst:
(a) Formstoffaggregat; und
(b) ein saures organisches Salz in einer Menge zwischen 0,25 Gewichtsprozent und 5,0 Gewichtsprozent, bezogen auf das Gewicht des Formstoffaggregates.

2. Verwendung der Gießereimischung nach Anspruch 1, die weiterhin ein Eisenoxid umfasst, das aus der Gruppe ausgewählt ist, bestehend aus rotem Eisenoxid, schwarzem Eisenoxid und Mischungen davon.

3. Verwendung der Gießereimischung nach Anspruch 2, wobei das Eisenoxid rotes Eisenoxid ist.

4. Verwendung der Gießereimischung nach Anspruch 3, wobei das Formstoffaggregat Quarzsand umfasst.

5. Verwendung der Gießereimischung nach Anspruch 4, wobei das saure organische Salz aus der Gruppe ausgewählt ist, bestehend aus Citratsalzen, Acetatsalzen, Tartratsalzen und Mischungen davon.

6. Verwendung der Gießereimischung nach Anspruch 5, wobei das Salz Natriumcitrat ist.

7. Verwendung der Gießereimischung nach Anspruch 4 oder 5, wobei das Gewichtsverhältnis von saurem organischen Salz zu rotem Eisenoxid von 1:1 bis 4:1 beträgt.

8. Verwendung der Gießereimischung nach Anspruch 7, wobei das Gewichtsverhältnis von saurem organischem Salz zu rotem Eisenoxid 1:1 bis 2:1 beträgt.

9. Verwendung der Gießereimischung nach Anspruch 1, wobei die Gießereimischung ein organisches Bindemittel enthält.

10. Verwendung der Gießereimischung nach Anspruch 9, wobei das Bindemittel ein phenolisches Urethan-Bindemittel oder ein Epoxyacrylat-Bindemittel ist.

11. Verwendung der Gießereimischung nach Anspruch 10, wobei die Gießereimischung einen Katalysator enthält.

12. Verwendung der Gießereimischung nach Anspruch 9, wobei die Menge des sauren organischen Salzes in der Gießereimischung 0,5 Gew.-% bis 4,0 Gew.-%, bezogen auf das Gewicht des Formstoffaggregates, beträgt.

13. Verwendung der Gießereimischung nach Anspruch 11, wobei die Menge des sauren organischen Salzes in der Gießereimischung von 0,5 Gew.-% bis 4,0 Gew.-%, bezogen auf das Gewicht des Formstoffaggregates, beträgt.

14. Verwendung der Gießereimischung nach Anspruch 12, wobei die Menge des sauren organischen Salzes in der Gießereimischung von 0,5 Gew.-% bis 2,5 Gew.-%, bezogen auf das Gewicht des Formstoffaggregates, beträgt.

15. Verwendung der Gießereimischung nach Anspruch 13, wobei die Menge des sauren organischen Salzes in der Gießereimischung von 0,5 Gew.-% bis 2,5 Gew.-%, bezogen auf das Gewicht des Formstoffaggregates, beträgt.

## Revendications

1. Utilisation d'un sel d'acide organique pour diminuer la formation des écailles sur une pièce métallique coulée, les sels d'acide organique faisant partie d'un mélange de fonderie, le mélange de fonderie comprenant :
(a) un agrégat de fonderie ; et
(b) un sel d'acide organique en une quantité comprise entre 0,25 % en poids et 5,0 % en poids sur la base du poids de l'agrégat de fonderie.

2. Utilisation du mélange de fonderie selon la revendication 1, qui comprend en outre un oxyde de fer choisi dans le groupe consistant en l'oxyde de fer rouge, l'oxyde de fer noir et des mélanges de ceux-ci.

3. Utilisation du mélange de fonderie selon la revendication 2, dans laquelle l'oxyde de fer est l'oxyde de fer rouge.

4. Utilisation du mélange de fonderie selon la revendication 3, dans laquelle l'agrégat de fonderie comprend du sable de silice.

5. Utilisation du mélange de fonderie selon la revendication 4, dans laquelle le sel d'acide organique est choisi dans le groupe consistant en les sels de citrate, sels d'acétate, sels de tartrate et des mélanges de ceux-ci.

6. Utilisation du mélange de fonderie selon la revendication 5, dans laquelle le sel est le citrate de sodium.

7. Utilisation du mélange de fonderie selon la revendication 4 ou 5, dans laquelle le rapport en poids d'un sel d'acide organique sur l'oxyde de fer rouge va de 1:1 à 4:1.

8. Utilisation du mélange de fonderie selon la revendication 7, dans laquelle le rapport en poids du sel d'acide organique sur l'oxyde de fer rouge va de 1:1 à 2:1.

9. Utilisation du mélange de fonderie selon la revendication 1, dans laquelle le mélange de fonderie contient un liant organique.

10. Utilisation du mélange de fonderie selon la revendication 9, dans laquelle le liant est un liant uréthane phénolique ou un liant acrylate époxy.

11. Utilisation du mélange de fonderie selon la revendication 10, dans laquelle le mélange de fonderie contient un catalyseur.

12. Utilisation du mélange de fonderie selon la revendication 9, dans laquelle la quantité de sel d'acide organique dans le mélange de fonderie va de 0,5 % en poids à 4,0 % en poids sur la base du poids de l'agrégat de fonderie.

13. Utilisation du mélange de fonderie selon la revendication 11, dans laquelle la quantité de sel d'acide organique dans le mélange de fonderie va de 0,5 % en poids à 4,0 % en poids sur la base du poids de l'agrégat de fonderie.

14. Utilisation du mélange de fonderie selon la revendication 12, dans laquelle la quantité de sel d'acide organique dans le mélange de fonderie va de 0,5 % en poids à 2,5 % en poids sur la base du poids de l'agrégat de fonderie.

15. Utilisation du mélange de fonderie selon la revendication 13, dans laquelle la quantité de sel d'acide organique dans le mélange de fonderie va de 0,5 % en poids à 2,5 % en poids sur la base du poids de l'agrégat de fonderie.
